# EUROPEAN PATENT SPECIFICATION

(11) **EP 3 269 691 B1**
(45) Date of publication and mention of the grant of the patent: **09.06.2021**
(21) Application number: 16761606.9
(22) Date of filing: 02.03.2016
(51) Int. Cl.: B32B 17/10, B32B 7/12

(54) **METHOD OF MANUFACTURING A LAMINATE**
VERFAHREN ZUR HERSTELLUNG EINES LAMINATS
PROCÉDÉ DE FABRICATION D'UN STRATIFIÉ

(30) Priority: 09.03.2015 JP 2015046113
(43) Date of publication of application: 17.01.2018
(73) Proprietor: Nippon Electric Glass Co., Ltd., Otsu-shi, Shiga 520-8639 (JP)
(72) Inventor: HAMANO Kenji, Otsu-shi Shiga 520-8639 (JP); TAKIMOTO Hiroshi, Otsu-shi Shiga 520-8639 (JP)
(74) Representative: Tetzner, Michael
(86) International application number: PCT/JP2016/056451
(87) International publication number: WO 2016/143636

(56) References cited:
- EP-A1- 2 708 355
- EP-A2- 3 154 784
- WO-A1-2012/157610
- DE-A1-102012 009 788
- DE-A1-102012 215 742
- DE-U1-202010 008 362
- JP-A- S5 617 953
- JP-A- H08 281 873
- JP-A- 2002 201 049
- JP-A- 2012 254 626
- US-A1- 2002 197 487

## Description

### Technical Field

The present invention relates to a method of manufacturing a laminate in which glass sheets are integrally laminated on a resin plate through intermediation of adhesive layers.

### Background Art

In recent years, portable electronic devices, such as a cellular phone (smart phone), a tablet PC, and a portable gaming device, have been in widespread use because their use locations are not limited and the devices have good portability. In order to maintain good portability, downsizing and weight saving are essential for those portable electronic devices. However, when a screen of such portable electronic device is reduced in size along with downsizing of the device, visibility of information displayed on the screen is decreased, and there arises a problem in that convenience of the portable electronic device is extremely decreased. Therefore, it is necessary to keep a large screen size even when the portable electronic device is downsized. In view of the foregoing, in the portable electronic device, there is an attempt to omit an operating portion provided outside the screen and incorporate an operating function into the screen, to thereby ensure a large screen size to the extent possible. In general, a touch panel is adopted for the screen of the portable electronic device of this kind.

A glass sheet is often used in a protective cover for the touch panel to be mounted in such portable electronic device because the glass sheet can ensure high hardness (scratch resistance) and high air tightness, and provides a classy looking and a good touch. However, glass is a heavy substance having a high specific gravity. Therefore, when various characteristics required for the protective cover are to be achieved only by the glass sheet, weight saving of the portable electronic device becomes difficult.

As means for coping with such problem, there has been proposed a laminate in which glass sheets are integrally laminated on both surfaces of a resin plate (organic glass sheet) through intermediation of adhesive layers (for example, see JP 2002 201049 A). With this, outermost layers are formed of the glass sheets, and hence various characteristics derived from glass, such as scratch resistance, can be ensured. Further, a middle layer is formed of the resin plate, which is light as compared to the glass sheets, and hence weight saving of the laminate in its entirety can be realized.

### Summary of Invention

### Technical Problem

In adopting such laminate as described above, when the thickness of the glass sheet is reduced to, for example, 300 µm or less, an end surface of the glass sheet becomes excessively fragile and is liable to be broken. In addition, even without breakage, when another member is brought into direct contact with the end surface of the glass sheet, there is a risk in that the glass sheet is peeled off from the resin plate. Such peeling of the glass sheet not only causes breakage later but also entails a problem of a reduced commercial value owing to a poor outer appearance.

As a measure against this, in JP 2002 201049 A, there is a disclosure of a technology involving bonding a resin (polyisobutylene tape) as another body to a peripheral part of the laminate ex post facto to protect the end surface of the glass sheet (see paragraph 0015 of JP 2002 201049 A) .

However, when the resin is bonded to the peripheral part of the laminate ex post facto as described above, there is a problem in that the resin itself is peeled off when the other member is brought into contact therewith owing to a small adhesive force, and the glass sheet cannot be protected sufficiently. In addition, there is also a problem in that the number of manufacturing steps is increased by the ex post facto bonding of the resin, and the manufacturing cost of the laminate is increased.

The present invention has been made in view of the above-mentioned circumstances, and a technical object of the present invention is to, in a laminate in which glass sheets are integrally laminated on both surfaces of a resin plate through intermediation of adhesive layers, strongly protect end surfaces of the glass sheets without increasing the number of manufacturing steps, to thereby prevent breakage or peeling of the end surfaces of the glass sheets. Solution to Problem

According to the present invention, which has been devised in order to achieve the above-mentioned obj ect, there is provided a method of manufacturing a laminate according to claim 1.

In the method of manufacturing a laminate, it is desired that: the glass sheets comprise a first glass sheet to be bonded to one surface of the resin plate and a second glass sheet to be bonded to another surface of the resin plate; the adhesive layers comprise a first adhesive layer configured to bond the first glass sheet to the one surface of the resin plate and a second adhesive layer configured to bond the second glass sheet to the another surface of the resin plate; the laminate comprises a first protruding portion formed by causing the first adhesive layer to protrude from an end surface of the resin plate and an end surface of the first glass sheet and a second protruding portion formed by causing the second adhesive layer to protrude from the end surface of the resin plate and an end surface of the second glass sheet; and the first protruding portion is brought into contact with at least part of the end surface of the first glass sheet, and the second protruding portion is brought into contact with at least part of the end surface of the second glass sheet.

With such a method, the first protruding portion derived from the first adhesive layer is brought into contact with at least part of the end surface of the first glass sheet and the second protruding portion derived from the second adhesive layer is brought into contact with at least part of the end surface of the second glass sheet. Therefore, for example, even when another member is brought into contact with the laminate from a side, the other member is brought into contact with the protruding portions ahead of the end surfaces of the glass sheets. Therefore, a situation in which the other member is brought into direct contact with the end surfaces of the glass sheets can be prevented. Accordingly, the generation of breakage or peeling in the end surfaces of the glass sheets can be effectively prevented. Further, the protruding portions are formed by causing the adhesive layers to protrude, and hence are formed integrally with the adhesive layers. This results in a structure in which the protruding portions are less liable to escape even in contact with the other member. With such structure, each of the protruding portions can strongly protect the end surface of the corresponding glass sheet.

In addition, in bonding the glass sheets to both surfaces of the resin plate, the first protruding portion and the second protruding portion are formed by causing the first adhesive layer and the second adhesive layer to protrude from the end surface of the resin plate and the end surfaces of the glass sheets . Therefore, the protruding portions are formed simultaneously in a step of bonding the glass sheets onto the resin plate. Accordingly, in the present invention, it is not necessary to involve a step of bonding a resin to the end surface of the laminate ex post facto as in the related art. That is, in the present invention, the laminate can be manufactured without increasing the number of manufacturing steps.

In the above-mentioned method, it is desired that: the first protruding portion be brought into contact with the end surface of the first glass sheet over half or more of a thickness of the first glass sheet; and the second protruding portion be brought into contact with the end surface of the second glass sheet over half or more of a thickness of the second glass sheet.

With this, the end surface of the first glass sheet and the end surface of the second glass sheet are covered with the first protruding portion and the second protruding portion, respectively, over half or more of the thickness of each glass sheet. Thus, even when the other member is brought into contact with the laminate, the other member is easily brought into contact with the protruding portions ahead of the end surfaces. With this, a situation in which the other member is brought into direct contact with the end surfaces of the glass sheets can be prevented, and hence the generation of breakage or peeling of the end surfaces of the glass sheets can be effectively prevented.

In addition, in the above-mentioned method, the first glass sheet may have a first surface to be bonded to the one surface of the resin plate through intermediation of the first adhesive layer and a second surface located on an opposite side of the first surface, the second glass sheet may have a first surface to be bonded to the another surface of the resin plate through intermediation of the second adhesive layer and a second surface located on an opposite side of the first surface, the first protruding portion may be brought into contact with a whole of the end surface of the first glass sheet and at least part of the second surface of the first glass sheet, and the second protruding portion may be brought into contact with a whole of the end surface of the second glass sheet and at least part of the second surface of the second glass sheet.

With this, the whole of the end surface of the first glass sheet and the whole of the end surface of the second glass sheet are covered with the first protruding portion and the second protruding portion, respectively, and hence the other member is prevented from being brought into direct contact with the end surfaces of the glass sheets. Specifically, each protruding portion is brought into contact with the glass sheet while wrapping around the glass sheet from the first surface through the end surface to part of the second surface. That is, each protruding portion covers the whole of the end surface under a state in which the protruding portion sandwiches the glass sheet from both sides of a first surface side and a second surface side. With this, the whole of the end surface of each glass sheet can be protected more strongly, and hence the generation of damage or peeling starting from the end surface of the glass sheet can be prevented more effectively.

In addition, in the above-mentioned method, each of the first protruding portion and the second protruding portion may be brought into contact with at least part of the end surface of the resin plate.

With this, the first protruding portion and the second protruding portion are brought into contact not only with the end surface of the first glass sheet and the end surface of the second glass sheet, respectively, but also with the end surface of the resin plate, and hence there is achieved a state in which the end surfaces of the glass sheets and the end surface of the resin plate are strongly joined. With this, in particular, peeling of the end surfaces of the glass sheets from the resin plate can be effectively prevented.

In addition, in the above-mentioned method, the first protruding portion and the second protruding portion may be joined to be formed integrally with each other.

When the first protruding portion and the second protruding portion are formed integrally with each other as described above, the protruding portions are less liable to escape even in contact with the other member. Thus, the end surfaces of the glass sheets are protected more strongly by virtue of those protruding portions.

The inventive method of manufacturing a laminate in which glass sheets are integrally laminated on both surfaces of a resin plate through intermediation of adhesive layers comprises causing the adhesive layers to protrude from an end surface of the resin plate and end surfaces of the glass sheets, to thereby form protruding portions derived from the adhesive layers, and bring the protruding portions into at least part of the end surfaces of the glass sheets.

With this, when the adhesive layers are caused to protrude from the end surface of the resin plate and the end surfaces of the glass sheets, the protruding portions can be formed simultaneously with bonding the glass sheets onto the resin plate. Besides, when the protruding portions are brought into contact with at least part of the end surfaces of the glass sheets, for example, even when the other member is brought into contact with the laminate from a side, the other member is brought into contact with the protruding portions ahead of the end surfaces of the glass sheets and can be prevented from being brought into contact with the end surfaces of the glass sheets . Further, when the protruding portions are formed integrally with the adhesive layers, there is achieved a structure in which the protruding portions are less liable to escape even in contact with the other member, and the end surfaces of the glass sheets can be strongly protected. With this, the laminate in which breakage or peeling of the end surfaces of the glass sheets can be prevented can be manufactured without increasing the number of manufacturing steps.

### Advantageous Effects of Invention

As described above, according to the present invention, in the laminate in which glass sheets are integrally laminated on both surfaces of a resin plate through intermediation of adhesive layers, the breakage or peeling of the end surfaces of the glass sheets can be prevented by strongly protecting the end surfaces of the glass sheets without increasing the number of manufacturing steps.

### Brief Description of Drawings

FIG. 1 is a sectional view for illustrating a first embodiment of a laminate.
FIG. 2 is a sectional view for illustrating a second embodiment of the laminate.
FIG. 3 is a sectional view for illustrating a third embodiment of the laminate.
FIG. 4 is a sectional view for illustrating a fourth embodiment of the laminate.
FIG. 5 is a sectional view for illustrating a fifth embodiment of the laminate.
FIG. 6 is a sectional view for illustrating a sixth embodiment of the laminate.
FIG. 7 is a sectional view for illustrating a seventh embodiment of the laminate.

### Description of Embodiments

Now, embodiments of the present invention are described with reference to the drawings.

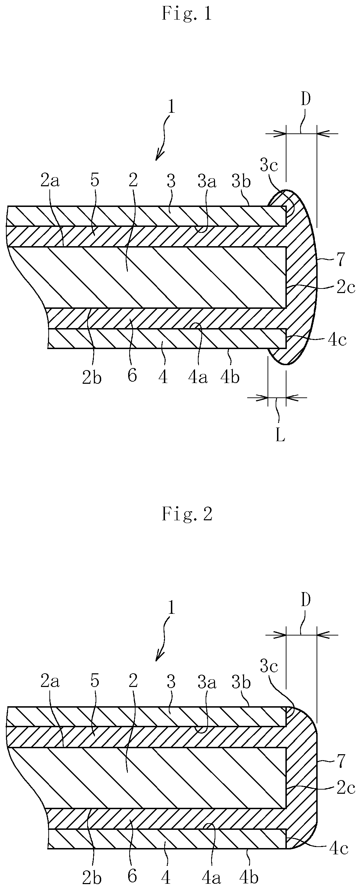

In FIG. 1, a first embodiment of a laminate is illustrated. In this embodiment, while a laminate 1 to be used as a protective cover for a touch panel is taken as an example, the use of the laminate 1 is not limited thereto. The laminate 1 may be used in a panel for various electrical and electronic devices, such as a flat panel display (FPD) and a solar cell, and as well, in a panel for a window of an architectural construction or various vehicles, a protective cover for an exhibit, and the like (the same applies in other embodiments).

As illustrated in FIG. 1, the laminate 1 comprises: a resin plate 2; a first glass sheet 3 to be bonded to one surface 2a of the resin plate 2 (hereinafter referred to as "first surface") ; a second glass sheet 4 to be bonded to another surface 2b of the resin plate 2 (hereinafter referred to as "second surface") ; a first adhesive layer 5 configured to bond the first glass sheet 3 to the first surface 2a of the resin plate 2; and a second adhesive layer 6 configured to bond the second glass sheet 4 to the second surface 2b of the resin plate 2, and has a five-layer structure formed of these constituents. Transparent materials are used for the resin plate 2, the glass sheets 3, 4, and the adhesive layers 5, 6 serving as constituents of the laminate 1.

The total thickness of the laminate 1 is preferably three times or more the sum of the thicknesses of the glass sheets 3, 4 (the sum of the thickness of the first glass sheet 3 and the thickness of the second glass sheet 4), more preferably five times or more the sum, most preferably ten times or more the sum. With this, the ratio of the resin plate 2 in the laminate 1 is increased, and thus weight saving of the laminate 1 can be realized.

While the thickness of the resin plate 2 is set to 0.01 mm or more and 20 mm or less, the thickness of the resin plate 2 is set to preferably 0.1 mm or more and 3 mm or less, particularly preferably 0.1 mm or more and 2 mm or less for use in a protective cover for a touch panel to be mounted in a portable electronic device . As materials for the resin plate 2, polycarbonate and a polymethyl methacrylate resin (PMMA) are preferred. In addition, various resin materials, such as polyethylene terephthalate, polyether ether ketone (PEEK), polyamide, polyvinyl chloride, polyethylene, polypropylene, and polyethylene naphthalate, may be utilized. Herein, the resin plate 2 includes a resin film.

It is preferred that each of the glass sheets 3, 4 be thin as compared to the resin plate 2, and the thickness thereof is set to 500 µm or less, preferably 10 µm or more and 300 µm or less, more preferably 50 µm or more and 200 µm or less. The first glass sheet 3 and the second glass sheet 4 preferably have the same thickness, but the laminate 1 may be formed of these glass sheets having different thicknesses.

As materials for the glass sheets 3, 4, there may be used, for example, silicate glass and silica glass, preferably borosilicate glass, soda lime glass, aminosilicate glass, and chemical tempered glass, most preferably alkali-free glass. When the alkali-free glass is used as the glass sheets 3, 4, the transparency of the laminate 1 can be increased. Herein, the alkali-free glass refers to glass substantially free of an alkali component (alkali metal oxide), specifically glass having a weight ratio of the alkali component of 3,000 ppm or less. In the present invention, the weight ratio of the alkali component is preferably 1,000 ppm or less, more preferably 500 ppm or less, most preferably 300 ppm or less.

For the first glass sheet 3 and the second glass sheet 4, the same kind of glass material or different kinds of glass materials may be used. When the laminate 1 is used as a protective cover for a touch panel, it is acceptable that a glass sheet formed of alkali-free glass, which is additionally excellent in weather resistance and chemical resistance, is used as a glass sheet on a side in which a user performs a touch operation (for example, the first glass sheet 3) and a glass sheet formed of soda-lime glass or the like is used as a glass sheet on the other side (for example, the second glass sheet 4).

It is desired that the Young's moduli of the glass sheets 3, 4 be as high as possible so that the glass sheets 3, 4 have such moderate stiffness that the glass sheets 3, 4 do not bend largely even when their thicknesses are reduced to 300 µm or less. From such viewpoint, the Young's moduli of the glass sheets 3, 4 are each set to 50 GPa or more, preferably 60 GPa or more, most preferably 70 GPa or more.

A float method, a roll-out method, a slot down-draw method, a redraw method, and the like, which have hitherto been known, may be used for the glass sheets 3, 4, but the glass sheets 3, 4 are preferably formed by an overflow down-draw method. The overflow down-draw method is a method in which a molten glass is poured into an overflow groove provided on an upper portion of a forming body having a substantially wedge cross section, and the molten glasses overflowing from the overflow groove to both sides are caused to flow down along side wall portions of the forming body on both sides to be fused and integrated with each other at the lower end of the forming body, to thereby continuously form a sheet of glass.

A large number of glass sheets 3, 4 having a thickness of 300 µm or less can be produced by the overflow down-draw method at a low cost. For the glass sheets 3, 4 thus produced, it is not necessary to adjust the thicknesses of the glass sheets 3, 4 by polishing, grinding, chemical etching, or the like. In addition, the overflow down-draw method is a forming method in which both surfaces of the glass sheet are not brought into contact with a forming member during forming. Thus, both the surfaces (translucent surfaces) of the obtained glass sheet serve as fire-polished surfaces, and high surface quality can be achieved without polishing. With this, adhesive forces of the adhesive layers 5, 6 to the glass sheets 3, 4 can be increased, and the glass sheets 3, 4 and the resin plate 2 can be laminated more accurately and precisely.

The glass sheets 3, 4 have surfaces (hereinafter referred to as "first surfaces") 3a, 4a to be bonded onto the resin plate 2, surfaces (hereinafter referred to as "second surfaces") 3b, 4b located on the opposite sides of the first surfaces 3a, 4a, and end surfaces 3c, 4c to be formed between the first surfaces 3a, 4a and the second surfaces 3b, 4b, respectively. The first surface 3a of the first glass sheet 3 is bonded to the first surface 2a of the resin plate 2 with the first adhesive layer 5. In addition, the first surface 4a of the second glass sheet 4 is bonded to the second surface 2b of the resin plate 2 with the second adhesive layer 6. The second surfaces 3b, 4b of the glass sheets 3, 4 serve as outer surfaces of the laminate 1. The end surfaces 3c, 4c of the glass sheets 3, 4 are arranged so as to be flush with an end surface 2c of the resin plate 2.

The thicknesses of the adhesive layers 5, 6 are each set to 1 µm or more and 500 µm or less. As materials for the adhesive layers 5, 6, there may be suitably used, for example, an ethylene-vinyl acetate copolymer resin (EVA), a polyvinyl butyral resin (PVB), and a UV curable resin. In addition, an acrylic pressure-sensitive adhesive, a silicone-based pressure-sensitive adhesive, a rubber-based pressure-sensitive adhesive, a UV curable acrylic adhesive, a UV curable epoxy-based adhesive, a thermosetting epoxy-based adhesive, a thermosetting melamine-based adhesive, a thermosetting phenol-based adhesive, and the like may be used.

The laminate 1 also comprises a protruding portion 7 formed by causing the first adhesive layer 5 and the second adhesive layer 6 to protrude from the end surface 2c of the resin plate 2 and the end surfaces 3c, 4c of the glass sheets 3, 4. A protruding size D of the protruding portion 7 from the end surfaces 3c, 4c of the glass sheets 3, 4 is set to 0.01 mm or more and 5 mm or less, preferably 0.1 mm or more and 3 mm or less (the same applies in the other embodiments). The protruding portion 7 is formed integrally with the first adhesive layer 5 and the second adhesive layer 6, and concurrently is brought into contact with the whole of the end surfaces 3c, 4c of the glass sheets 3, 4 and the whole of the end surface 2c of the resin plate 2. Inaddition, the protruding portion 7 is in a state of being brought into contact with part of the second surfaces 3b, 4b of the glass sheets 3, 4. A range L in which the protruding portion 7 is brought into contact with the second surfaces 3b, 4b of the glass sheets 3, 4 is set to preferably 1 mm or more and 3 mm or less (the same applies in the other embodiments) .

A method of manufacturing the laminate 1 having the above-mentioned configuration is described below. First, the resin plate 2 and the glass sheets 3, 4 having the same size (area) as the resin plate 2 are prepared. Next, an adhesive layer (for example, the first adhesive layer 5) is laminated on one of the glass sheets 3, 4 (for example, the first glass sheet 3), the resin plate 2 is laminated thereon, an adhesive layer (for example, the second adhesive layer 6) is laminated on the resin plate 2, and the other glass sheet (for example, the second glass sheet 4) is laminated thereon. At this time, it is necessary to laminate the adhesive layers 5, 6 having a predetermined size so that the adhesive layers 5, 6 protrude from the end surface 2c of the resin plate 2 and the end surfaces 3c, 4c of the glass sheets 3, 4 in a subsequent step.

After that, the resin plate 2, the glass sheets 3, 4, and the adhesive layers 5, 6 in a state of being laminated on each other as described above are joined through thermal pressure bonding with an autoclave device.

Through the thermal pressure bonding, the first adhesive layer 5 and the second adhesive layer 6 protrude from the end surface 2c of the resin plate 2 and the end surfaces 3c, 4c of the glass sheets 3, 4 to be brought into contact with the end surface 2c of the resin plate 2 and the end surfaces 3c, 4c of the glass sheets 3, 4, and further, reach the second surfaces 3b, 4b of the glass sheets 3, 4. The protruding portion 7 thus formed is cured while being integrated with the adhesive layers 5, 6, and is strongly fixed to the end surface 2c of the resin plate 2 and the end surfaces 3c, 4c of the glass sheets 3, 4. By the above-mentioned procedures, the laminate 1 in which its end portion is covered with the protruding portion 7 is completed.

When the laminate 1 is manufactured by using a UV curable adhesive (UV curable resin), ultraviolet rays are radiated under a state in which the adhesive is interposed between the resin plate 2 and the glass sheets 3, 4 without using the autoclave device.

As described above, the laminate 1 basically has the five-layer structure formed of the resin plate 2, the glass sheets 3, 4, and the adhesive layers 5, 6. However, the structure of the laminate 1 is not limited thereto, and for example, the laminate 1 may have a multi-layer structure of seven or more layers by further laminating another glass sheet on the first glass sheet 3 through intermediation of an additional adhesive layer.

In addition, an antireflection film layer or an antifouling film layer may be formed on an outer surface of the laminate 1, that is, on the second surfaces 3b, 4b of the glass sheets 3, 4. Those layers may be formed before the bonding of glass sheets 3, 4 onto the resin plate 2.

For example, it is preferred that the antireflection film layer be formed of an inorganic material. It is more preferred that the antireflection film layer be formed of an alternating film of a layer having a low refractive index and a layer having a high refractive index. As the layer having a low refractive index, one kind selected from the group consisting of silicon oxide, aluminum oxide, and magnesium fluoride is preferred, and the total physical thickness of the film having a low refractive index on one surface is preferably from 100 nm to 700 nm. In addition, as the layer having a high refractive index, one kind selected from the group consisting of silicon nitride, aluminum nitride, zirconium oxide, niobium oxide, tantalum oxide, hafnium oxide, titanium oxide, tin oxide, and zinc oxide is preferred, and the total physical thickness of the film having a high refractive index on one surface is preferably from 50 nm to 250 nm.

As a method of forming the antireflection film layer on the glass sheets 3, 4, a sputtering method, a vacuum deposition method, a dipping method, a spin coating method, an ion plating method, a CVD method, and the like may be utilized, but a sputtering method is particularly advantageous in that the antireflection film layer has a uniform thickness, is strongly bonded onto the glass sheets 3, 4, and besides has high film hardness.

According to the laminate 1 and the method of manufacturing the laminate 1 according to this embodiment described above, the protruding portion 7 derived from the adhesive layers 5, 6 is brought into contact with the end surfaces 3c, 4c of the glass sheets 3, 4, and hence, even when another member is brought into contact with the laminate 1 from a side, the other member is brought into contact with the protruding portion 7 covering the end surfaces 3c, 4c of the glass sheets 3, 4 without being brought into contact with the end surfaces 3c, 4c of the glass sheets 3, 4. The protruding portion 7 is formed integrally with the adhesive layers 5, 6 and concurrently fixed to the end surfaces 3c, 4c of the glass sheets 3, 4, and hence the protruding portion 7 is less liable to escape even in contact with the other member. Thus, the protruding portion 7 strongly protects the end surfaces 3c, 4c for a long period of time. With this, the generation of breakage or peeling in the end surfaces 3c, 4c of the glass sheets 3, 4 can be prevented reliably. Further, the protruding portion 7 is also brought into contact with the whole of the end surface 2c of the resin plate 2 and part of the second surfaces 3b, 4b of the glass sheets 3, 4, and hence covers the whole of the end portion of the laminate 1. With this, the other member is reliably prevented from being brought into contact with the end surfaces 3c, 4c of the glass sheets 3, 4, and the generation of damage or peeling in the end surfaces 3c, 4c can be prevented more effectively.

In addition, the protruding portion 7 is formed by causing the adhesive layers 5, 6 to protrude from the end surface 2c of the resin plate 2 and the end surfaces 3c, 4c of the glass sheets 3, 4 in bonding the glass sheets 3, 4 onto the resin plate 2, and hence the protruding portion 7 is formed simultaneously in a step of bonding the glass sheets 3, 4 onto the resin plate 2. Accordingly, it is not necessary to involve a step of bonding a resin to the end surface of the laminate 1 ex post facto as in the related art. Accordingly, in the present invention, the laminate can be manufactured without increasing the number of manufacturing steps.

In FIG. 2, a second embodiment of the laminate is illustrated. While the protruding portion 7 is brought into contact even with part of the second surfaces 3b, 4b of the glass sheets 3, 4 in the configuration of the first embodiment described above, the protruding portion 7 is brought into contact with the whole of the end surfaces 3c, 4c of the glass sheets 3, 4 and the whole of the end surface 2c of the resin plate 2 to cover and protect these end surfaces without being brought into contact with the second surfaces 3b, 4b in this embodiment.

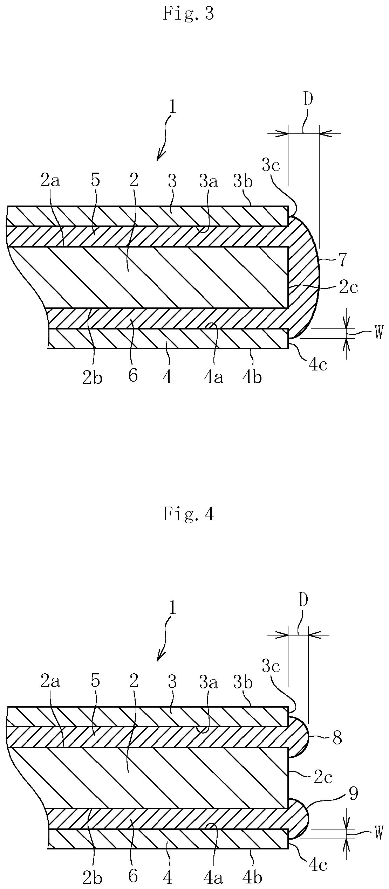

In FIG. 3, a third embodiment of the laminate is illustrated. In this embodiment, the protruding portion 7 is brought into contact with the whole of the end surface 2c of the resin plate 2, but with respect to the glass sheets 3, 4, is brought into contact not with the whole but with part of the end surfaces 3c, 4c. A range W in which the protruding portion 7 is brought into contact with each of the end surfaces 3c, 4c of the glass sheets 3, 4 is desirably half (1/2) or more of the thickness of each of the glass sheets 3, 4 (the same applies in the other embodiments) . In this embodiment, the protruding portion 7 is brought into contact with each of the end surfaces 3c, 4c over about half of the thickness of each of the glass sheets 3, 4.

As described above, the protruding portion 7 can protect the end portion of the laminate 1 not only by being brought into contact with the whole of the end surfaces 3c, 4c of the glass sheets 3, 4 as in the first embodiment and the second embodiment, but also by being brought into contact with part of the end surfaces 3c, 4c of the glass sheets 3, 4. That is, the protruding portion 7 can prevent the generation of damage or peeling in the glass sheets 3, 4 by being brought into contact with at least part of the end surfaces 3c, 4c of the glass sheets 3, 4.

In FIG. 4, a fourth embodiment of the laminate is illustrated. The laminate 1 according to this embodiment comprises: a first protruding portion 8 formed by causing the first adhesive layer 5 to protrude from the end surface 2c of the resin plate 2 and the end surface 3c of the first glass sheet 3; and a second protruding portion 9 formed by causing the second adhesive layer 6 to protrude from the end surface 2c of the resin plate 2 and the end surface 4c of the second glass sheet 4.

The first protruding portion 8 is brought into contact with part of the end surface 3c of the first glass sheet 3. More specifically, the first protruding portion 8 is brought into contact with the end surface 3c of the first glass sheet 3 over about half of the thickness of the first glass sheet 3. In addition, the first protruding portion 8 is also brought into contact with part of the end surface 2c of the resin plate 2.

The second protruding portion 9 is brought into contact with part of the end surface 4c of the second glass sheet 4. More specifically, the second protruding portion 9 is brought into contact with the end surface 4c of the second glass sheet 4 over about half of the thickness of the second glass sheet 4. In addition, the second protruding portion 9 is also brought into contact with part of the end surface 2c of the resin plate 2.

Comparison between this embodiment and the first embodiment shows that the protruding amount (volume) of the adhesive layers 5, 6 is reduced in this embodiment as compared to the first embodiment, to thereby form the first protruding portion 8 and the second protruding portion 9 at the following two separate positions : a location corresponding to the first adhesive layer 5 and a location corresponding to the second adhesive layer 6. In other words, it can be said that, in the first embodiment, the first protruding portion 8 and the second protruding portion 9 are joined to integrally form the one protruding portion 7 by increasing the protruding amount (volume) of the adhesive layers 5, 6 as compared to this embodiment.

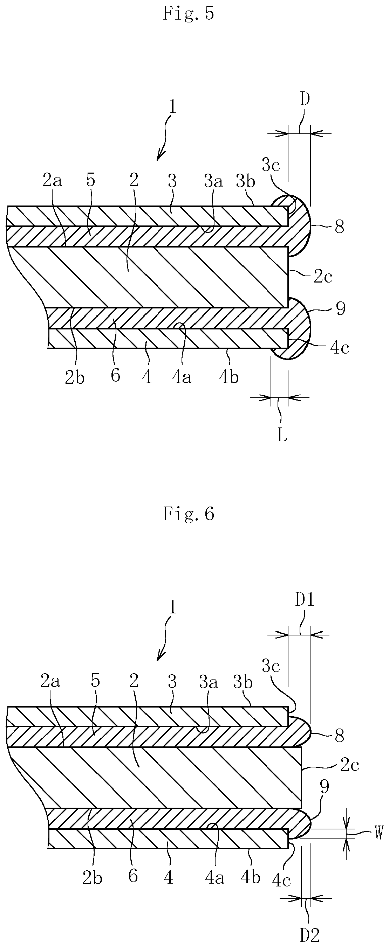

In FIG. 5, a fifth embodiment of the laminate is illustrated. In the laminate 1 according to this embodiment, the first protruding portion 8 and the second protruding portion 9 have different configurations from those in the fourth embodiment. While the first protruding portion 8 is brought into contact with part of the end surface 3c of the first glass sheet 3 in the fourth embodiment, the first protruding portion 8 is brought into contact with the whole of the end surface 3c of the first glass sheet 3 and also with part of the second surface 3b of the first glass sheet 3 in this embodiment. Similarly, the second protruding portion 9 is brought into contact with the whole of the end surface 4c of the second glass sheet 4 and also with part of the second surface 4b of the second glass sheet 4.

In FIG. 6, a sixth embodiment of the laminate is illustrated. In this embodiment, the resin plate 2 has a large size (area) as compared to each of the glass sheets 3, 4, and the end surface 2c of the resin plate 2 protrudes with respect to the end surfaces 3c, 4c of the glass sheets 3, 4. Therefore, a protruding size (hereinafter referred to as "first protruding size") D1 of the protruding portions 8,9 from the end surfaces 3c, 4c of the glass sheets 3, 4 differs from a protruding size (hereinafter referred to as "second protruding size") D2 of the protruding portions 8, 9 from the end surface 2c of the resin plate 2. Specifically, the second protruding size D2 is smaller than the first protruding size D1 (D2<D1) . In addition, the protruding portions 8, 9 are brought into contact with part of the end surfaces 3c, 4c of the glass sheets 3, 4, but are prevented from being brought into contact with the end surface 2c of the resin plate 2.

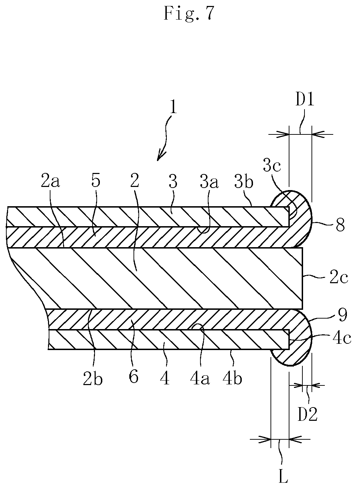

In FIG. 7, a seventh embodiment of the laminate is illustrated. In the laminate 1 according to this embodiment, the first protruding portion 8 and the second protruding portion 9 have different configurations from those in the sixth embodiment. While the protruding portions 8, 9 are brought into contact with part of the end surfaces 3c, 4c of the glass sheets 3, 4 in the sixth embodiment, the protruding portions 8, 9 are brought into contact with the whole of the end surfaces 3c, 4c of the glass sheets 3, 4 and also with part of the second surfaces 3b, 4b of the glass sheets 3, 4 in this embodiment. Also in this embodiment, as in the sixth embodiment, the second protruding size D2 is smaller than the first protruding size D1 (D2<D1).

In the first embodiment to the seventh embodiment described above, an example in which the protruding portions 7, 8, 9 protrude over the whole circumference of the end surface 2c of the resin plate 2 is illustrated, but the embodiments of the present invention are not limited thereto. The protruding portions 7, 8, 9 only need to protrude from at least part of the end surface 2c of the resin plate 2.

### Examples

A test piece (Example) of a laminate according to the above-mentioned second embodiment (see FIG. 2) was produced, and its effect was confirmed. In the test piece, a polycarbonate plate measuring 151 mm×201 mm and 3.0 mm in thickness was used as the resin plate, and glass sheets each measuring 148 mm×198 mm and 200 µm in thickness were used as the glass sheets. Alkali-free glass (product name: OA-10G) manufactured by Nippon Electric Glass Co., Ltd. was used for the glass sheets. In addition, adhesive layers each measuring 150 mm×200 mm and 400 µm in thickness formed of an ethylene-vinyl acetate copolymer resin (EVA) were used as the adhesive layers.

The glass sheets were superimposed on both surfaces of the polycarbonate plate through intermediation of the adhesive layers, and the resultant was subjected to thermal pressure bonding with an autoclave device. In this case, the thermal pressure bonding was performed under the conditions of a heating temperature of 120°C, a pressure of 1 MPa, and a thermal pressure bonding time of 1 hour. Twenty test pieces were produced by the procedure described above, and each of the test pieces was tested for the presence or absence of peeling or damage. As a result, a sufficient prevention effect on peeling and damage was able to be confirmed for all of the test pieces.

### Reference Signs List

- 1: laminate

- 2: resin plate
- 2a: one surface of resin plate
- 2b: another surface of resin plate
- 2c: end surface of resin plate
- 3: first glass sheet
- 3a: first surface of first glass sheet
- 3b: second surface of first glass sheet
- 3c: end surface of first glass sheet
- 4: second glass sheet
- 4a: first surface of second glass sheet
- 4b: second surface of second glass sheet
- 4c: end surface of second glass sheet
- 5: first adhesive layer
- 6: second adhesive layer
- 7: protruding portion
- 8: first protruding portion
- 9: second protruding portion

## Claims

1. A method of manufacturing a laminate (1) in which glass sheets (3, 4) are integrally laminated on both surfaces (2a, 2b) of a resin plate (2) through intermediation of adhesive layers (5, 6), **characterized in that**
the method comprises causing the adhesive layers (5, 6) to protrude from an end surface (2c) of the resin plate (2) and end surfaces (3c, 4c) of the glass sheets (3, 4), to thereby form protruding portions (8, 9) derived from the adhesive layers (5, 6), and bring the protruding portions (8, 9) into contact with at least part of the end surfaces (3c, 4c) of the glass sheets (3, 4).

2. The method of manufacturing a laminate (1) according to claim 1, wherein:
the glass sheets (3, 4) comprise a first glass sheet (3) to be bonded to one surface (2a) of the resin plate (2) and a second glass sheet (4) to be bonded to another surface (2b) of the resin plate (2);
the adhesive layers (5, 6) comprise a first adhesive layer (5) configured to bond the first glass sheet (3) to the one surface (2a) of the resin plate (2) and a second adhesive layer (6) configured to bond the second glass sheet (4) to the other surface (2b) of the resin plate (2);
a first protruding portion (8) is formed by causing the first adhesive layer (5) to protrude from an end surface (2c) of the resin plate (2) and an end surface (3c) of the first glass sheet (3) and a second protruding portion (9) is formed by causing the second adhesive layer (6) to protrude from the end surface (2c) of the resin plate (2) and an end surface (4c) of the second glass sheet (4); and
the first protruding portion (8) is brought into contact with at least part of the end surface (3c) of the first glass sheet (3), and the second protruding portion (9) is brought into contact with at least part of the end surface (4c) of the second glass sheet (4) .

3. The method of manufacturing a laminate (1) according to claim 2, wherein:
the first protruding portion (8) is brought into contact with the end surface (3c) of the first glass sheet (3) over half or more of a thickness of the first glass sheet (3); and
the second protruding portion (9) is brought into contact with the end surface (4c) of the second glass sheet (4) over half or more of a thickness of the second glass sheet (4).

4. The method of manufacturing a laminate (1) according to claim 2 or 3, wherein:
the first glass sheet (3) has a second surface (3b) located on an opposite side of the first surface (3a);
the second glass sheet (4) has a second surface (4b) located on an opposite side of the first surface (4a);
the first protruding portion (8) is brought into contact with a whole of the end surface (3c) of the first glass sheet (3) and at least part of the second surface (3b) of the first glass sheet (3); and
the second protruding portion (9) is brought into contact with a whole of the end surface (4c) of the second glass sheet (4) and at least part of the second surface (4b) of the second glass sheet (4) .

5. The method of manufacturing a laminate (1) according to any one of claims 2 to 4, wherein the first protruding portion (8) and the second protruding portion (9) are each brought into contact with at least part of the end surface (2c) of the resin plate (2) .

6. The method of manufacturing a laminate (1) according to any one of claims 2 to 5, wherein the first protruding portion (8) and the second protruding portion (9) are joined to be formed integrally with each other.

## Patentansprüche

1. Verfahren zum Herstellen eines Laminats (1), bei dem Glasfolien (3, 4) integral auf beide Oberflächen (2a, 2b) einer Harzplatte (2) durch Zwischenanordnung von Klebstoffschichten (5, 6) laminiert sind, **dadurch gekennzeichnet, dass**
das Verfahren das Veranlassen umfasst, dass die Klebstoffschichten (5, 6) von einer Endfläche (2c) der Harzplatte (2) und Endflächen (3c, 4c) der Glasfolien (3, 4) hervorstehen, um dadurch von den Klebstoffschichten (5, 6) vorstehende Vorsprungabschnitte (8, 9) zu bilden, und die Vorsprungabschnitte (8, 9) in Kontakt mit wenigstens einem Teil der Endflächen (3c, 4c) der Glasfolien (3, 4) kommen.

2. Verfahren zum Herstellen eines Laminats (1) nach Anspruch 1, wobei:
die Glasfolien (3, 4) eine erste Glasfolie (3), die auf eine Oberfläche (2a) der Harzplatte (2) zu kleben ist, und eine zweite Glasfolie (4), die auf eine andere Oberfläche (2b) der Harzplatte (2) zu kleben ist, umfassen,
die Klebstoffschichten (5, 6) eine erste Klebstoffschicht (5), die zu beschaffen ist, die erste Glasfolie (3) mit der einen Oberfläche (2a) der Harzplatte (2) zu verkleben, und eine zweite Klebstoffschicht (6), die zu beschaffen ist, die zweite Glasfolie (4) mit der anderen Oberfläche (2b) der Harzplatte (2) zu verkleben, umfassen,
ein erster Vorsprungabschnitt (8) gebildet wird, indem die erste Klebstoffschicht (5) veranlasst wird, von einer Endfläche (2c) der Harzplatte (2) und einer Endfläche (3c) der ersten Glasfolie (3) vorzustehen, und ein zweiter Vorsprungabschnitt (9) gebildet wird, indem die zweite Klebstoffschicht (6) veranlasst wird, von einer Endfläche (2c) der Harzplatte (2) und einer Endfläche (4c) der zweiten Glasfolie (4) vorzustehen, und
der erste Vorsprungabschnitt (8) in Kontakt mit wenigstens einem Teil der Endfläche (3c) der ersten Glasfolie (3) gebracht wird und der zweite Vorsprungabschnitt (9) in Kontakt mit wenigstens einem Teil der Endfläche (4c) der zweiten Glasfolie (4) gebracht wird.

3. Verfahren zum Herstellen eines Laminats (1) nach Anspruch 2, wobei:
der erste Vorsprungabschnitt (8) über die Hälfte oder mehr einer Dicke der ersten Glasfolie (3) in Kontakt mit der Endfläche (3c) der ersten Glasfolie (3) gebracht wird und
der zweite Vorsprungabschnitt (9) über die Hälfte oder mehr einer Dicke der zweiten Glasfolie (4) in Kontakt mit der Endfläche (4c) der zweiten Glasfolie (4) gebracht wird.

4. Verfahren zum Herstellen eines Laminats (1) nach Anspruch 2 oder 3, wobei:
die erste Glasfolie (3) eine zweite Oberfläche (3b) aufweist, die auf einer der ersten Oberfläche (3a) gegenüberliegenden Seite angeordnet ist,
die zweite Glasfolie (4) eine zweite Oberfläche (4b) aufweist, die auf einer der ersten Oberfläche (4a) gegenüberliegenden Seite angeordnet ist,
der erste Vorsprungabschnitt (8) mit der gesamten Endfläche (3c) der ersten Glasfolie (3) und wenigstens einen Teil der zweiten Oberfläche (3b) der ersten Glasfolie (3) in Kontakt gebracht wird und
der zweite Vorsprungabschnitt (9) mit der gesamten Endfläche (4c) der zweiten Glasfolie (4) und wenigstens einen Teil der zweiten Oberfläche (4b) der zweiten Glasfolie (4) in Kontakt gebracht wird.

5. Verfahren zum Herstellen eines Laminats (1) nach einem der Ansprüche 2 bis 4, wobei der erste Vorsprungabschnitt (8) und der zweite Vorsprungabschnitt (9) jeweils in Kontakt mit wenigstens einem Teil der Endfläche (2c) der Harzplatte (2) gebracht wird.

6. Verfahren zum Herstellen eines Laminats (1) nach einem der Ansprüche 2 bis 5, wobei der erste Vorsprungabschnitt (8) und der zweite Vorsprungabschnitt (9) so verbunden sind, dass sie integral miteinander ausgebildet sind.

## Revendications

1. Procédé de fabrication d'un stratifié (1) dans lequel des feuilles de verre (3, 4) sont intégralement stratifiées sur les deux surfaces (2a, 2b) d'une plaque de résine (2), par l'intermédiaire de couches adhésives (5, 6),
ledit procédé étant **caractérisé en ce qu'**il fait dépasser les couches adhésives (5, 6) par rapport à une surface d'extrémité (2c) de la plaque de résine (2) et par rapport à des surfaces d'extrémités (3c, 4c) des feuilles de verre (3, 4), pour former ainsi des parties saillantes (8, 9) à partir des couches adhésives (5, 6), et **en ce qu'**il place les parties saillantes (8, 9) au contact d'au moins une partie des surfaces d'extrémités (3c, 4c) des feuilles de verre (3, 4).

2. Procédé de fabrication d'un stratifié (1) selon la revendication 1, procédé dans lequel :
les feuilles de verre (3, 4) comprennent une première feuille de verre (3) à coller sur une surface (2a) de la plaque de résine (2) et une seconde feuille de verre (4) à coller sur une autre surface (2b) de la plaque de résine (2) ;
les couches adhésives (5, 6) comprennent une première couche adhésive (5) configurée pour coller la première feuille de verre (3) sur l'une des surfaces (2a) de la plaque de résine (2) et comprennent une seconde couche adhésive (6) configurée pour coller la seconde feuille de verre (4) sur l'autre surface (2b) de la plaque de résine (2) ;
une première partie saillante (8) est formée en faisant dépasser la première couche adhésive (5) par rapport à une surface d'extrémité (2c) de la plaque de résine (2) et par rapport à une surface d'extrémité (3c) de la première feuille de verre (3), et une seconde partie saillante (9) est formée en faisant dépasser la seconde couche adhésive (6) par rapport à la surface d'extrémité (2c) de la plaque de résine (2) et par rapport à une surface d'extrémité (4c) de la seconde feuille de verre (4) ; et
la première partie saillante (8) est placée au contact d'au moins une partie de la surface d'extrémité (3c) de la première feuille de verre (3), et la seconde partie saillante (9) est placée au contact d'au moins une partie de la surface d'extrémité (4c) de la seconde feuille de verre (4).

3. Procédé de fabrication d'un stratifié (1) selon la revendication 2, procédé dans lequel :
la première partie saillante (8) est placée au contact de la surface d'extrémité (3c) de la première feuille de verre (3), sur une moitié ou plus d'une épaisseur de la première feuille de verre (3) ; et
la seconde partie saillante (9) est placée au contact de la surface d'extrémité (4c) de la seconde feuille de verre (4), sur une moitié ou plus d'une épaisseur de la seconde feuille de verre (4).

4. Procédé de fabrication d'un stratifié (1) selon la revendication 2 ou 3, procédé dans lequel :
la première feuille de verre (3) a une seconde surface (3b) placée sur un côté opposé de la première surface (3a) ;
la seconde feuille de verre (4) a une seconde surface (4b) placée sur un côté opposé de la première surface (4a) ;
la première partie saillante (8) est placée au contact d'une totalité de la surface d'extrémité (3c) de la première feuille de verre (3) et au contact d'au moins une partie de la seconde surface (3b) de la première feuille de verre (3) ; et
la seconde partie saillante (9) est placée au contact d'une totalité de la surface d'extrémité (4c) de la seconde feuille de verre (4) et au contact d'au moins une partie de la seconde surface (4b) de la seconde feuille de verre (4).

5. Procédé de fabrication d'un stratifié (1) selon l'une quelconque des revendications 2 à 4, procédé dans lequel la première partie saillante (8) et la seconde partie saillante (9) sont chacune placées au contact d'au moins une partie de la surface d'extrémité (2c) de la plaque de résine (2).

6. Procédé de fabrication d'un stratifié (1) selon l'une quelconque des revendications 2 à 5, procédé dans lequel la première partie saillante (8) et la seconde partie saillante (9) sont réunies pour être formées solidairement l'une avec l'autre.
